# EUROPEAN PATENT SPECIFICATION

(11) **EP 3 839 183 B1**
(45) Date of publication and mention of the grant of the patent: **19.02.2025**
(21) Application number: 20383059.1
(22) Date of filing: 04.12.2020
(51) Int. Cl.: E05D 15/30, E05F 15/60, E05F 15/646, H02K 41/02

(54) **AUTOMATIC DOOR WITH BALANCED MOVEMENT**
AUTOMATISCHE TÜR MIT AUSGEGLICHENER BEWEGUNG
PORTE AUTOMATIQUE À MOUVEMENT ÉQUILIBRÉ

(30) Priority: 17.12.2019 ES 201931116
(43) Date of publication of application: 23.06.2021
(73) Proprietor: Torrabias Cantal, Oscar, 08580 Sant Quirze de Besora (ES)
(72) Inventor: Torrabias Cantal, Oscar, 08580 Sant Quirze de Besora (ES)
(74) Representative: Torras Toll, Jorge

(56) References cited:
- EP-A1- 2 034 117
- EP-A1- 2 933 411
- DE-A1- 19 734 752
- JP-A- 2002 295 118
- US-A1- 2006 021 192

## Description

### TECHNICAL FIELD

The present invention relates to an automatic door with balanced movement consisting of a frame and a leaf, operated by a linear motor.

### BACKGROUND OF THE INVENTION

Balanced-motion doors are characterized because its opening is made by means of a combined translation and pivoting movement of the door leaf. For this, the door incorporates means that facilitate this combination of movements, so that, when it begins to open, one end of the door leaf moves outwards from the threshold and the opposite end moves inwards, describing an elliptical arch with which the swept area is reduced to half compared to that of a hinged door. This allows large doors to be incorporated in small spaces.

These doors usually incorporate means of operation to achieve automated operation. These means of operation are based on the use of electric motors rotary operating the door leaf indirectly by using three common techniques, the use of transmission spindles and gears, transmission belts and chains and connecting rod.

The document CA2586745A1 describes an automatic balanced door with a motion operator comprising a rotating electric motor and a reduction transmission coupled to a rotating output member that rotates a door arm, which has one end fixedly connected to the rotatable outlet member, and the other pivoting to the door leaf. In this way, when the operator rotates the outlet member, this one, simultaneously, rotates the door arm to move the door leaf.

Document DE19734752C2 describes a balanced movement door equipped with an actuating device for the translational and pivoting movement of the door leaf, where a belt or chain is used that is connected to the leaf and which is moved by a rotary electric motor through of two pulleys. The leaf is mounted on the door frame by means of support and pivot arms which, as the door leaf driven by the belt or chain is displaced, force it to pivot.

Document US3247617 describes a door with balanced movement and electric drive, which leaves are supported through a rotating arm on a rotation bearing arranged in the door frame. The activation of the door leaf is driven by means of a spindle driven by a rotary electric motor housed in the upper door frame, the spindle nut of which is rotatably connected to the upper front edge of the door leaf. The rotary motion of the motor is transmitted through of the spindle to the leaf, achieving the desired combined displacement of translation and pivoting.

Document DE20022518U1 describes a door with balanced movement whose leaf is associated by its upper and lower part to arms with pivot joint. The operating means of the door are constituted by a rotary electric motor that executes the opening and closing movement of the leaf by a connecting rod arranged between the rotary motor and the arms with pivot joint.

The operators based on electric rotating motors has different objectives problems.

They are complex transmission mechanisms with a multitude of interconnected elements that require maintenance to correct misalignments due to wear and tear of their various components. On the other hand, to control the fine movement of the door is complex because it is made by means of start and stop commands of the electric rotating motor, as well as with the control of its angular velocity, being in many cases necessary to resort to a box of gears of reduction that can be shifted the weight of the door leaf with the power supplied by the motor. This implies a long kinematics chain prone to acquire clearances and the use of multiple sensors, through which is determined the position and the speed of the door leaf, requiring a fine- tuning of the installation to ensure that the movements of opening and closing are carried out in a smooth and effective manner.

A third problem focuses on the high sonority of the means of operation of the door leaf caused by the vibrations of the electric rotary motors, as well as of the constituent elements of the means of transmission of motion to the leaf. This is an undesired effect that is especially annoying when it comes to interior doors or doors located in rooms where a low sound level is required.

One solution to the above problem is the replacement of operators based on rotary electric motors by linear motors.

An example of this type is patent JP2002295118A, which describes a balanced movement door featuring magnetic attraction means that hold the door reliably closed, acting in combination with a linear motor that pushes the carriage supporting the door leaf and is managed by a controller arranged above the guide rail along which the carriage supporting the door runs.

There are several problems with this system. Opening the door requires the door to be pushed by hand for the linear motor to start, as the linear motor cannot start the door movement by itself. On the other hand, this device is bulky and require significant space in the upper area of the door to house the linear motor controller, the operating mechanisms and the electric motor.

### DESCRIPTION OF THE INVENTION

The invention raises the objective of developing an automatic movement balanced door with a mechanism of compact operation housed inside the running profile, completely silent and devoid of maintenance, which does not incorporate any kinematic chain or moving parts, so that it can be controlled simply and effectiveness.

This device does not need magnetic attraction means to keep the door reliably closed, as it is the linear motor itself that keeps the door closed.

It also does not need to be pushed by hand to start the linear motor, as it can start the opening movement by itself, allowing the door to be opened remotely.

The aim is solved by the technical features of claim 1.

A door according to the invention includes a leaf hanging from a shaft that protrudes from the lower face of a roller carriage that moves inside a running profile located in the horizontal section of the door frame, which gives the leaf translational displacement capacity, and pivoting arms articulated at one end to the door frame and to the leaf at the other.

These pivoting arms force the pivoting of the leaf on the shaft of the roller carriage as it moves from the center of the running profile towards the inner end of the door.

The roller carriage has rollers on its sides that rotate freely on a roller track located inside the rolling profile and incorporates a set of coils fed by brushes that protrude laterally beyond the rollers to contact power supply tracks arranged longitudinally along the inner side wall of the running profile.

On the upper inner wall of the runner profile there is a set of magnets that extend along the entire path of the roller carriage, so that, in any position of the roller carriage, the coil assembly always faces the magnets.

The static magnetic field magnets interact with the electromagnetic field generated by the coil, giving rise to forces of attraction and repulsion that are controllable through the activation, intensity, and polarity of the current received by the coils.

The controlled succession of forces of attraction and repulsion allows the displacement controlled by the rail of the running carriage and the leaf hanging from it.

On the inner wall of the cover that closes the running profile, there are detection means designed to detect the position and speed of the running carriage with respect to the running carriage. The data captured by the detection means are received in a control unit located inside the running profile that manage the voltage and polarity of the electrical supply tracks.

A software application resident on the control unit interprets the data of the means of detection and generates electrical pulses that feed the coils through the tracks of power and the brushes. The variation of these electrical pulses modifies selectively the electromagnetic fields generated by the coils, so that the coordination between the position data received and the electrical pulses generated, allows creating the attractive and repulsive forces between coils and magnets to move the running carriage along the rail in the desired direction and speed, thus apporting the translational movement to the leaf.

The advancing or reversing of the leaf along the rail in combination with the action of angular guiding that conducive the pivoting arms promote on it, result in the balanced transactional and pivoting movement characteristic of this type of doors.

Therefore, the automatic door with balanced movement object of the invention solves the objective problems posed since the motor means do not incorporate moving parts or susceptible to friction, so that it does not generate vibrations or need of lubrication or maintenance interventions to correct misalignments due to wear. The entire operating mechanism of the door is integrated inside of the running profile, which has a size and structure equivalent to a conventional running profile, so it does no need extra space to house them and in consequence is considerably more compact than any other previous operating mechanism. Lastly, the use of a linear-type motor as an operator element allows the movement of the door leaf to be controlled with greater precision and efficiency, as interposed mechanisms such as transmission boxes, spindles or reduction gear devices are not necessary.

### DESCRIPTION OF THE DRAWINGS

In order to illustrate the foregoing, the present report is accompanied by the description of a sheet of drawings in which an example of an embodiment of the invention is shown.

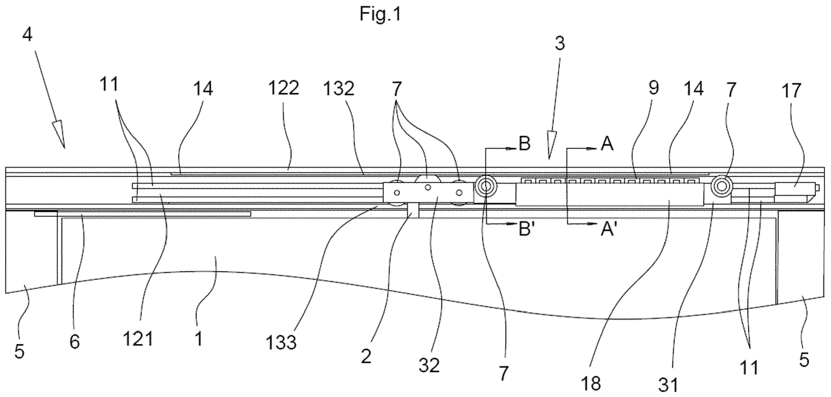

In the said drawings, figure 1 represents a front view of an automatic door according to the invention without the cover.

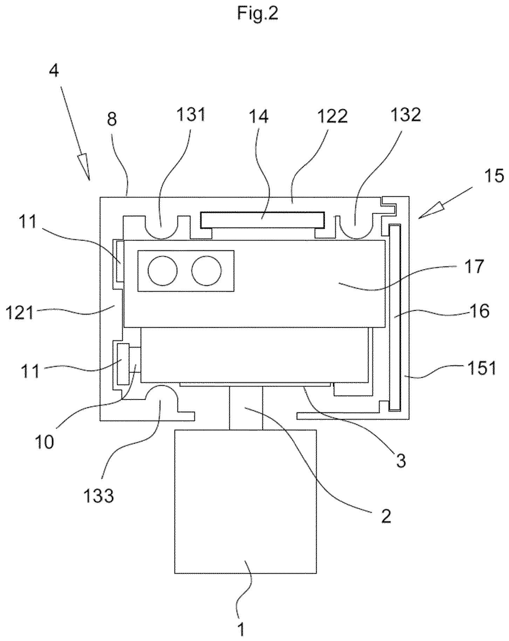

Figure 2 represents a side view of the running profile with the control unit in the first term.

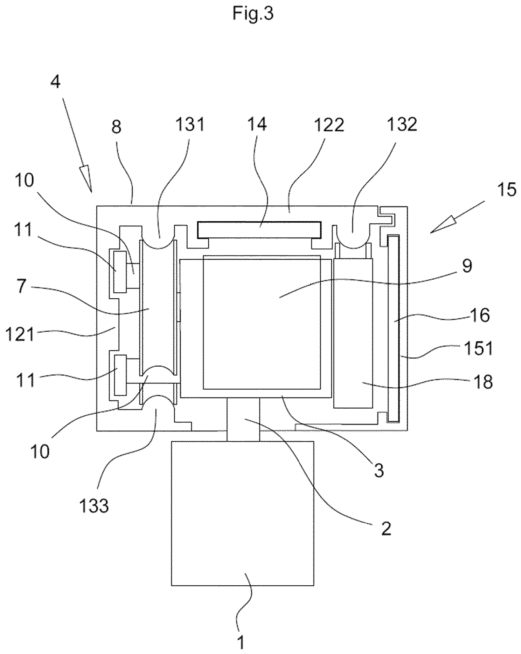

Figure 3 corresponds to a view of the section according to the section A-A' of figure 1.

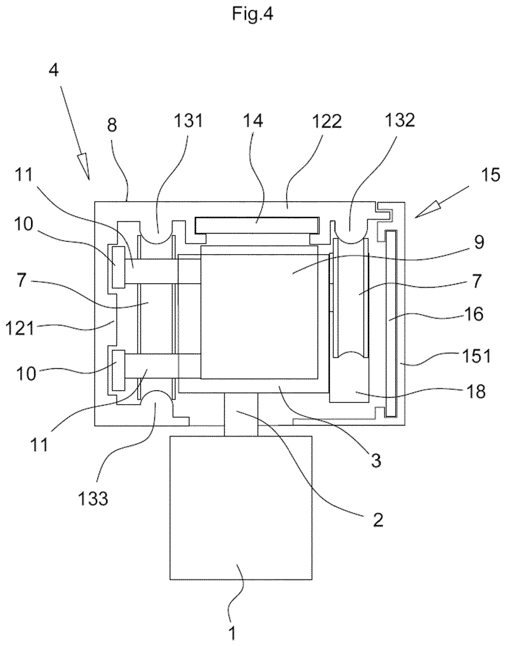

Figure 4 corresponds to a view of the section according to the section B-B' of figure 1.

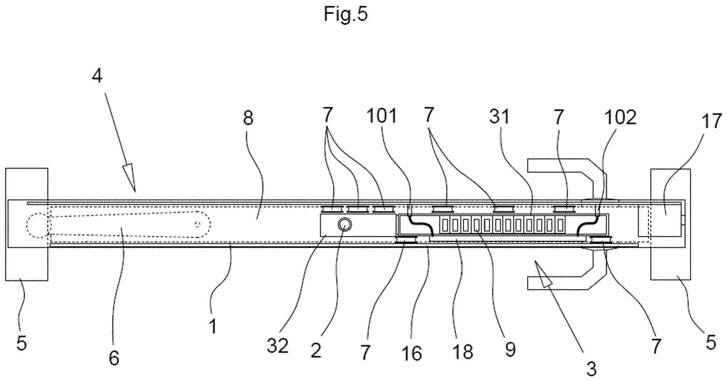

Figure 5 represents a plan schematic view of a closed door.

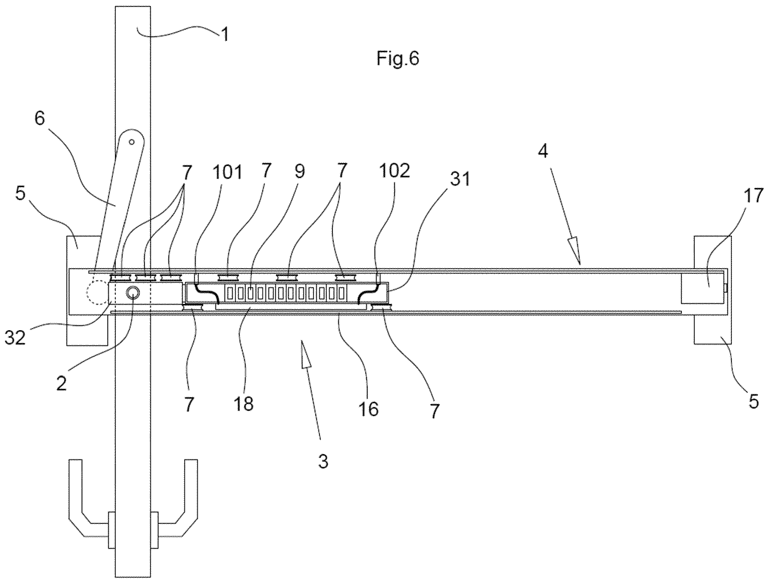

Figure 6 represents a plan schematic view of an opened door.

### LIST OF REFERENCES

1- Leaf
2 - Shaft
3- Roller carriage
31- Major block
32- Minor block
4- Running profile
5- Frame
6- Pivoting arms
7- Rollers
8- Rail
9- Coils
10- Brushes
101 - First pair of brushes
102 - Second pair of brushes
11- Electrical power supply track
121 - Inner side wall
122 - Inner top wall
131 - Inner top track
132 - Outer top track
133 - Inner lower track
14 - Magnets
15 - Cover
151 - Inner wall of cover
16 - Detecting means
17 - Control Unit
18 - Electronic block

### DESCRIPTION OF A REALIZATION PREFERRED

The door according to the invention consists of a frame (5) in which the leaf (1) hanging from a shaft (2) protruding from the lower face of the roller carriage (3). This roller carriage (3) is structured in a major block (31) and a minor block (32) closer to the hinge area.

The roller carriage (3) moves along the inside of the running profile (4) located in the horizontal section of the frame (5).

In the example shown, the running profile (4) has a general "L" shaped section and is laterally closed by a cover (15).

The invention also incorporates pivoting arms (6) articulated at one end to the frame (5) and at the other to the leaf (1).

In the example shown, the roller carriage (3) incorporates six rollers (7) on one side and two other rollers (7) on the opposite side.

All the rollers (7) run on a rail (8) located inside the running profile (4).

The rail (8) includes an inner top track (131), an upper outer running track (132), both located along the inner top wall (122) of the running profile (4), and a Inner lower track (133) located along the lower area of the inner side wall (121) of the running profile (4).

According to the example represented, the major block (31) houses twelve coils (9), although it could be a number higher or lower, depending on the needs, and has two pairs of brushes (10) that protrude laterally extending beyond the rollers (7) for contact with two electrical power supply tracks (11) located longitudinally along the inner side wall (121) of the running profile (4).

A pair of brushes (101) is positioned at the beginning of the major block (31) while the other pair of brushes (102) is positioned at the end of the major block (31) and constitute the means through which the electric current passes from the electrical power supply track (11) to the coils (9).

In the inner top wall (122) of the running profile (4), located between the inner top track (131) and the outer top track (132), there is arranged an alignment of magnets (14) that extend along the entire path of the roller carriage (3), the coils (9) facing the magnets (14) in any position along their path.

On the inner wall of the cover (151) that closes the running profile (4) there are detection means (16) that detect the position of an electronic block (18) located on the roller carriage (3).

The data captured by the detection means (16) and the electronic block (18) are received in a control unit (17) located inside the running profile (4), which manages the voltage and polarity of the electricity in the electrical power supply track (11).

## Claims

1. Automatic door with balanced movement consisting of a frame (5) and a leaf (1), operated by a linear
motor where the linear motor is composed of a roller carriage (3), an L-shaped running profile (4) located in the horizontal section of the door frame, and a cover (15) which closes laterally the running profile (4), whereby:
• The roller carriage (3) moves along the inside of the running profile (4), has rollers (7) on its side and is divided into a major block (31) containing a set of coils (9) as well as an electronic block (18), the major block also comprising a pair of brushes (101) protruding laterally beyond the rollers (7) at the beginning and another pair of brushes (102) protruding laterally beyond the rollers (7) at the end, and a minor block (32), located closer to the hinge area than the major block, from the underside of which protrudes the shaft (2) from which hangs the leaf (1) with the capacity to rotate on the shaft (2);
• The L-shaped running profile (4) comprises an inner side wall (121) and a top inner wall (122), the running profile further incorporating within it a roller track (8) on which the rollers (7) rotate freely, a control unit (17) which controls the electronic block (18), two power supply tracks (11) located along the inner side wall (121) on which the brushes (101 and 102) contact and move, and an alignment of magnets (14) that extend along the entire path of the roller carriage (3), arranged on the top inner wall (122), so that, in any position of the roller carriage, the coil assembly always faces the magnets;
• The cover (15) comprises an inner wall (151) and detection means (16) operatively connected to the control unit (17), said detection means (16) being located on the inner wall of the cover (151), and detecting the position and speed of the electronic block (18), whereby the control unit manages the voltage and polarity of the electrical supply tracks.

2. Automatic door with balanced movement according to claim 1, **characterised in that** the running profile (4) has an inner top track (131), an upper outer top track (132), both located along the upper inner wall (122) and between which the magnet alignment (14) is arranged, and a inner lower track (133) located along the lower area of the inner side wall (121).

## Patentansprüche

1. **Automatische Tür mit ausgeglichener Bewegung,** bestehend aus einem Rahmen (5) und einem Türflügel (1), der durch einen Linearmotor betrieben wird, wobei der Linearmotor aus einem Rollwagen (3), einem L-förmigen Laufprofil (4), das sich im horizontalen Abschnitt des Türrahmens befindet, und einer Abdeckung (15) besteht, die das Laufprofil (4) seitlich verschließt, wobei:
• Der Rollwagen (3) sich innerhalb des Laufprofils (4) bewegt, Rollen (7) an seinen Seiten aufweist und in einen Hauptblock (31) unterteilt ist, der eine Anordnung von Spulen (9) sowie einen Elektronikblock (18) enthält. Der Hauptblock umfasst außerdem ein Paar Bürsten (101), die seitlich über die Rollen (7) hinaus an der Vorderseite hervorstehen, sowie ein weiteres Paar Bürsten (102), die seitlich über die Rollen (7) hinaus an der Rückseite hervorstehen, und einen Nebenblock (32), der näher am Scharnierbereich liegt als der Hauptblock. An der Unterseite des Nebenblocks ragt eine Achse (2) hervor, an der der Türflügel (1) hängt und sich um die Achse (2) drehen kann;
• Das L-förmige Laufprofil (4) umfasst eine innere Seitenwand (121) und eine obere Innenwand (122). Das Laufprofil enthält außerdem eine Rollbahn, auf der die Rollen (7) frei rotieren, eine Steuereinheit (17), die den Elektronikblock (18) steuert, zwei Stromversorgungsschienen (11), die sich entlang der inneren Seitenwand (121) erstrecken und mit denen die Bürsten (101 und 102) in Kontakt stehen und sich bewegen, sowie eine Anordnung von Magneten (14), die sich entlang des gesamten Weges des Rollwagens (3) erstrecken und an der oberen Innenwand (122) angebracht sind, so dass das Spulensystem in jeder Position des Rollwagens stets den Magneten zugewandt ist;
• Die Abdeckung (15) umfasst eine Innenwand (151) sowie Erkennungsmittel (16), die operativ mit der Steuereinheit (17) verbunden sind. Diese Erkennungsmittel (16) befinden sich an der Innenwand der Abdeckung (151) und erkennen die Position und Geschwindigkeit des Elektronikblocks (18), wobei die Steuereinheit die Spannung und Polarität der Stromversorgungsschienen steuert.

2. **Automatische Tür mit ausgeglichener Bewegung nach Anspruch 1, dadurch gekennzeichnet, dass** das Laufprofil (4) eine innere obere Schiene (131) und eine äußere obere Schiene (132) umfasst, die sich beide entlang der oberen Innenwand (122) befinden und zwischen denen die Magnetanordnung (14) angeordnet ist, sowie eine innere untere Schiene (133), die sich entlang des unteren Bereichs der inneren Seitenwand (121) erstreckt.

## Revendications

1. **Porte automatique à mouvement équilibré** comprenant un cadre (5) et un vantail (1), actionnée par un moteur linéaire, où le moteur linéaire est constitué d'un chariot à rouleaux (3), d'un profilé de guidage en forme de L (4) situé dans la section horizontale du cadre de la porte, et d'un capot (15) qui ferme latéralement le profilé de guidage (4), **caractérisée en ce que** :
∘ Le chariot à rouleaux (3) se déplace à l'intérieur du profilé de guidage (4), comporte des rouleaux (7) sur ses côtés et est divisé en un bloc principal (31) contenant un ensemble de bobines (9) ainsi qu'un bloc électronique (18), le bloc principal comprenant également une paire de balais (101) dépassant latéralement des rouleaux (7) à l'avant, et une autre paire de balais (102) dépassant latéralement des rouleaux (7) à l'arrière, ainsi qu'un bloc secondaire (32), situé plus près de la zone de charnière que le bloc principal, depuis la partie inférieure duquel dépasse l'axe (2) auquel est suspendu le vantail (1), avec la capacité de pivoter autour de l'axe (2) ;
∘ Le profilé de guidage en forme de L (4) comprend une paroi latérale intérieure (121) et une paroi supérieure intérieure (122), le profilé de guidage intégrant en outre une piste pour rouleaux (8) sur laquelle les rouleaux (7) tournent librement, une unité de contrôle (17) qui gère le bloc électronique (18), deux pistes d'alimentation électrique (11) situées le long de la paroi latérale intérieure (121) sur lesquelles les balais (101 et 102) établissent contact et se déplacent, et un alignement d'aimants (14) s'étendant sur toute la longueur du chemin du chariot à rouleaux (3), disposé sur la paroi supérieure intérieure (122), de sorte qu'en toute position du chariot à rouleaux, l'ensemble de bobines fait toujours face aux aimants ;
∘ Le capot (15) comprend une paroi intérieure (151) et des moyens de détection (16) connectés de manière opérative à l'unité de contrôle (17), lesdits moyens de détection (16) étant situés sur la paroi intérieure du capot (151), et détectant la position et la vitesse du bloc électronique (18), permettant à l'unité de contrôle de gérer la tension et la polarité des pistes d'alimentation électrique.

2. **Porte automatique à mouvement équilibré** selon la revendication 1, **caractérisée en ce que** le profilé de guidage (4) comprend une piste supérieure intérieure (131), une piste supérieure extérieure (132), toutes deux situées le long de la paroi supérieure intérieure (122) et entre lesquelles est disposé l'alignement des aimants (14), et une piste inférieure intérieure (133) située le long de la zone inférieure de la paroi latérale intérieure (121).
